(19) Europäisches Patentamt

European Patent Office

Office européen des brevets

(11) EP 0 614 320 B1

(12) **EUROPEAN PATENT SPECIFICATION**

(45) Date of publication and mention
of the grant of the patent:
**26.05.1999 Bulletin 1999/21**

(51) Int Cl.⁶: **H04N 9/64**

(21) Application number: **94103301.1**

(22) Date of filing: **04.03.1994**

(54) **Television receiver and television signal determination circuit**

Fernsehempfänger und Fernsehsignalbestimmungsschaltung

Récepteur de télévision et circuit de détermination du signal de télévision

(84) Designated Contracting States:
**DE ES FR GB**

(30) Priority: **04.03.1993 JP 43651/93**
**30.11.1993 JP 300563/93**

(43) Date of publication of application:
**07.09.1994 Bulletin 1994/36**

(73) Proprietor: **SANYO ELECTRIC Co., Ltd.**
**Moriguchi-shi, Osaka 570 (JP)**

(72) Inventors:
• **Honda, Fumiaki**
**Takatsuki-shi, Osaka (JP)**
• **Hosoya, Nobukazu**
**Ikoma-gun, Nara (JP)**

(74) Representative: **Glawe, Delfs, Moll & Partner**
**Patentanwälte**
**Postfach 26 01 62**
**80058 München (DE)**

(56) References cited:
**EP-A- 0 245 038**

• **PATENT ABSTRACTS OF JAPAN vol. 15, no. 62**
**(E-1033) 14 February 1991 & JP-A-02 288 489**
**(MATSUSHITA)**
• **PATENT ABSTRACTS OF JAPAN vol. 14, no. 218**
**(E-925) 9 May 1990 & JP-A-02 054 695 (TOSHIBA)**
• **PATENT ABSTRACTS OF JAPAN vol. 7, no. 247**
**(E-208) 2 November 1983 & JP-A-58 133 092**
**(MATSUSHITA)**
• **PATENT ABSTRACTS OF JAPAN vol. 7, no. 62**
**(E-164) 15 March 1983 & JP-A-57 207 494**
**(ROOMU KK)**

## Description

## BACKGROUND OF THE INVENTION

Field of the invention

The present invention relates to a television receiver and a television signal determination circuit. More specifically, the present invention relates to a television signal determination circuit which is provided in a television receiver or a television signal recording/reproducing apparatus capable of selectively receiving color television signals of different color television system such as SECAM system, PAL system, NTSC system and etc., and determines the color television system.

Description of the prior art

One example of such a kind of prior art is disclosed in Japanese Patent Laying-Open Gazette No. 57-207494 laid open on December 20, 1982. In the prior art, a voltage signal according to a sub-carrier frequency is obtained by passing an input color signal through a bandpass filter which may be a ceramic filter having a high quality factor (Q), and the voltage signal is applied to a resonance amplifier having a tuned point at a frequency of a half of a horizontal frequency ($f_H$). If an output of the resonance amplifier is a sine-wave, it is possible to determine that a color television signal is of the SECAM system wherein the sub-carrier frequency is changed at every two horizontal lines (2H).

In this prior art, it is necessary to use the ceramic filter and the resonance amplifier of $f_H/2$, and therefore, there was a problem that it is difficult to incorporate such a television signal determination circuit into an integrated circuit.

JP-A-58 133 092 discloses a circuit to discriminate signals of PAL and SECAM television systems connecting a filter circuit to a video amplifier with a terminal to which a burst signal is inputted, and the output side is connected to buffer amplifiers. A sampling/holding circuit having a burst gate terminal is connected to the output side of one buffer amplifier, and a rectifying circuit, a comparator circuit and a grounded capacitor are connected to the output side of the sampling/holding circuit. However, it is not known from this prior art device to integrate a delay circuit for delaying a phase of the held signal.

JP-A-02 288 489 discribes a PAL/SECAM signal determination circuit detecting the level of a burst signal of a colour signal from a frequency conversion circuit and calculating a difference to an output of a level detection circuit before horizontal synchronization and comparing the difference with a reference level. However, the document does not disclose the advantagous combination of a the delay circuit with a sampling/holding circuit.

## SUMMARY OF THE INVENTION

Therefore, a principal object of the present invention is to provide a television signal determination circuit capable of being incorporated in an integrated circuit easily.

Another object of the present invention is to provide a television signal determination circuit in which a malfunction due to a noise, cross-talk or the like hardly occurs.

Another object of the present invention is to provide a television receiver or a television signal recording/reproducing apparatus which is provided with such a television signal determination circuit.

A television signal determination circuit according to the present invention comprises:

voltage signal outputting means (12) for outputting a voltage signal having a level according to a sub-carrier frequency (fsc) of an input color signal;
signal holding means (46) for holding said voltage signal during one horizontal line period to obtain a held signal;
delay means (48) for delaying said held signal for one horizontal line, said delay means (48) including first and second sampling and holding means (62, 64) for alternately sampling and holding said held signal during two horizontal lines, respectively, to produce a first and second rectangular-wave signals;
switching means (66) for alternately outputting the first and second rectangular-wave signals for one horizontal line; and
determination signal outputting means (50, 52, 54) for outputting a determination signal on the basis of said held signal and the output from said switching means (66), said determination signal outputting means (50, 52, 54) including a phase comparator (50) which receives the held signal and said output of said switching means (66), a low-pass filter (52) which converts the ouput of the phase comparator (50) into a voltage signal, and a voltage comparator (54) which compares said voltage signal with a reference voltage ($V_{ref}$) and produces said determination signal indicative of the television signal.

The voltage signal outputting means includes first means which includes an all-pass filter, a phase-comparator and etc., for example, the first means applying a signal representative of a phase of the sub-carrier frequency of the input color signal to second means. In the second means which is also included in the voltage signal outputting means and includes a low-pass filter, for example, the signal is converted into a voltage signal. The voltage signal is held for one horizontal line period (1H) by the signal holding means such as a sampling/holding circuit, for example.

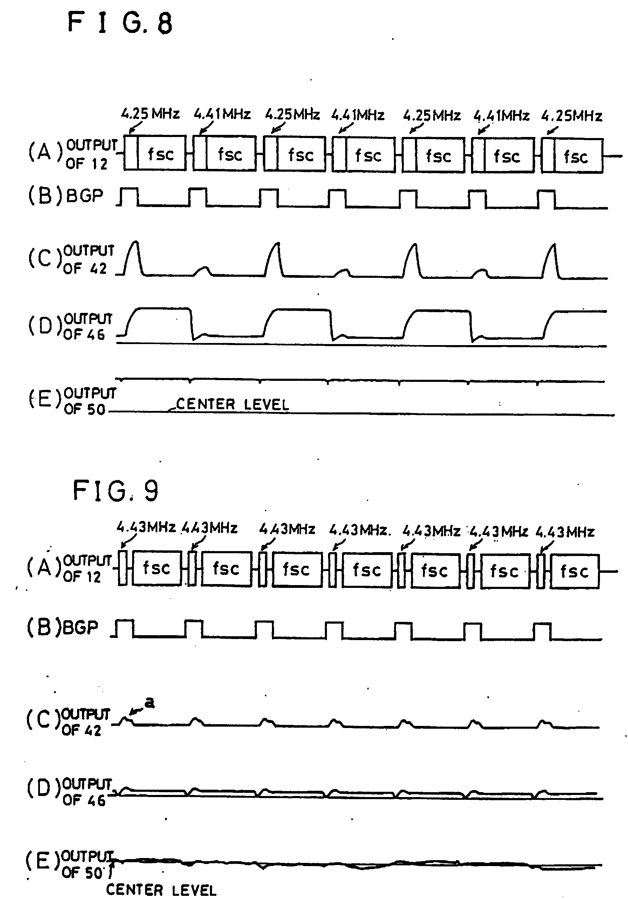

In the SECAM system, the held signal held by the signal holding means changes to "high level" or "low level" at every two lines, and therefore, becoming a wave-form of an approximately rectangular-wave (see Figure 8(D)). In addition, hereinafter, the held signal may be called as "rectangular-wave signal". The held signal or the rectangular-wave signal is applied to the delay means and the determination signal outputting means. In the delay means, by making sampling/holding of the rectangular-wave signal by first and second sampling/holding means alternately at every two horizontal lines, obtaining a first and second rectangular-wave signals. The first and second rectangular-wave signals are alternately outputted at every two lines, resulting in producing a rectangular-wave signal which is delayed by only one horizontal line period (1H).

The determination signal outputting means compares the two rectangular-wave signals which are outputted from the signal holding means and the delay means with each other, and obtains a television system determination signal according to a comparison result.

In the SECAM system, since the sub-carrier frequency is alternately changed at every two horizontal lines at 4.25 MHz or 4.41 MHz, and therefore, a television system determination signal of the SECAM system, which is different from that of the PAL system or the NTSC system wherein all the horizontal lines have the same sub-carrier frequency.

In accordance with the present invention, all circuit components can be easily incorporated in an integrated circuit because it is not necessary to use a ceramic filter, a resonance amplifier and etc.

In one aspect of the present invention, a television signal determination circuit comprises voltage signal outputting means for outputting a voltage signal having a level according to a sub-carrier frequency of an input color signal; first and second sampling/holding means for receiving the voltage signal as input signals thereof, respectively; first and second outputting means for alternately outputting signals from the first and second sampling/holding means at every two horizontal lines; and determination signal outputting means for outputting a determination signal on the basis of the signals from the first and second outputting means.

Each of the first and second sampling/holding means is sampling/holding means which outputs averaged levels of peak values of respective voltage signals and has the same characteristic, time constants for charging / discharging, for example. Control pulses supplied to the first and second sampling/holding means are pulse signals having two horizontal scanning periods (2H) and being deviated from each other by one horizontal scanning period (1H). Then, each of the first and second outputting means is a selector, for example for alternately withdrawing the signal from the first and second sampling/holding means at two horizontal scanning lines, and the signals which are outputted from the first and second outputting means at a time are signals from the sampling/holding means different from each other.

The voltage signal from the voltage signal outputting means as described previously is held by the first and second sampling/holding means during 2H period. The first sampling/holding means is activated by burst gate pulses of odd number lines, and the second sampling/holding circuit is activated by burst gate pulses of even number lines.

The signals outputted from the first and second sampling/holding means are inputted to the first and second outputting means to be outputted alternately at every 2H. When the signal from the first sampling/holding means is outputted from the first outputting means, the signal from the second sampling/holding means is outputted from the second outputting means. Inversely, when the signal from the second sampling/holding means is outputted from the first outputting means, the signal from the first sampling/holding means is outputted from the second outputting means. The determination signal outputting means compares the signals outputted from the first and second outputting means with each other so as to obtain a determination signal according to a comparison result.

In this aspect, in the SECAM system, since the sub-carrier frequency is changed to 4.25 MHz or 4.41 MHz alternately at every 2H, a determination signal which is different from a determination signal of the PAL system or the NTSC system wherein all the line having the same sub-carrier frequency can be obtained.

In accordance with the aspect, since the first and second sampling/holding means each of which has a time constant relatively longer than the voltage signal according to the sub-carrier frequency and holds the peak value with a discharging time constant larger than a charging time constant, it is possible to make influence due to a noise, crosstalk or the like be small. Furthermore, by utilizing the first and second sampling/holding means having the same characteristic, a determination sensitivity may not be lowered even if the voltage signal level of respective lines are largely different from each other in such the SECAM system and the time constant is not made short.

The above described objects and other objects, features, aspects and advantages of the present invention will become more apparent from the following detailed description of the present invention when taken in conjunction with the accompanying drawings.

**BRIEF DESCRIPTION OF THE DRAWINGS**

Figure 1 is a block diagram showing one embodiment according to the present invention;
Figure 2 is a circuit diagram showing one example of an APF utilized in the embodiment;
Figure 3 is a circuit diagram showing one example of a gyrator utilized in the APF shown in Figure 2;
Figure 4 is a graph showing a frequency and phase-shifting amount characteristic of the APF shown in Figure 2;
Figure 5 is a circuit diagram showing one example of a 90° phase-shifter utilized in the embodiment;
Figure 6 is a circuit diagram showing one example of a phase-comparator utilized in the embodiment;
Figure 7 is a wave-form chart showing an operation of the phase-shifter shown in Figure 6;
Figure 8 is a wave-form chart showing operations of respective portions of the embodiment in the SECAM system;
Figure 9 is a wave-form chart showing operations of respective portions of the embodiment in the PAL system;

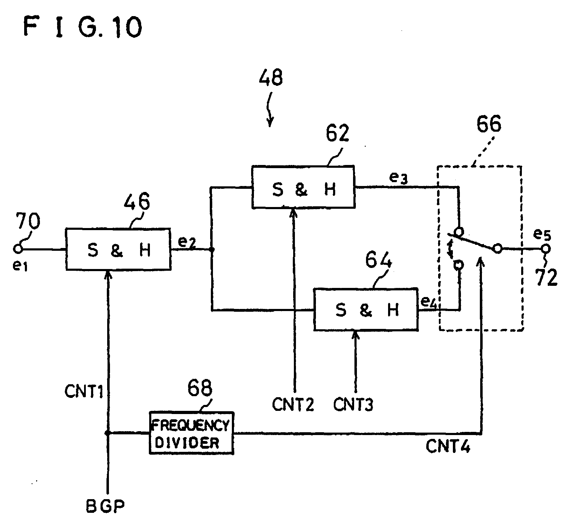

Figure 10 is a block diagram showing one example of a 1H delay circuit utilized in the embodiment;
Figure 11 is a wave-form chart showing an operation of the 1H delay circuit shown in Figure 10;
Figure 12 is a block diagram showing another embodiment according to the present invention;
Figure 13 is a wave-form chart showing operations of respective portions of Figure 12 embodiment in the SECAM system;
Figure 14 is a wave-form chart showing operations of respective portions of Figure 12 embodiment in the PAL system;
Figure 15 is a circuit diagram showing one example of a sampling/holding circuit utilized in Figure 12 embodiment;
Figure 16 is a wave-form chart showing an operation of Figure 12 embodiment in comparison with Figure 1 embodiment; and
Figure 17 is a block diagram showing a major portion of a television receiver into which Figure 1 or Figure 12 embodiment can be incorporated.

**DETAILED DESCRIPTION OF THE PREFERRED EMBODIMENTS**

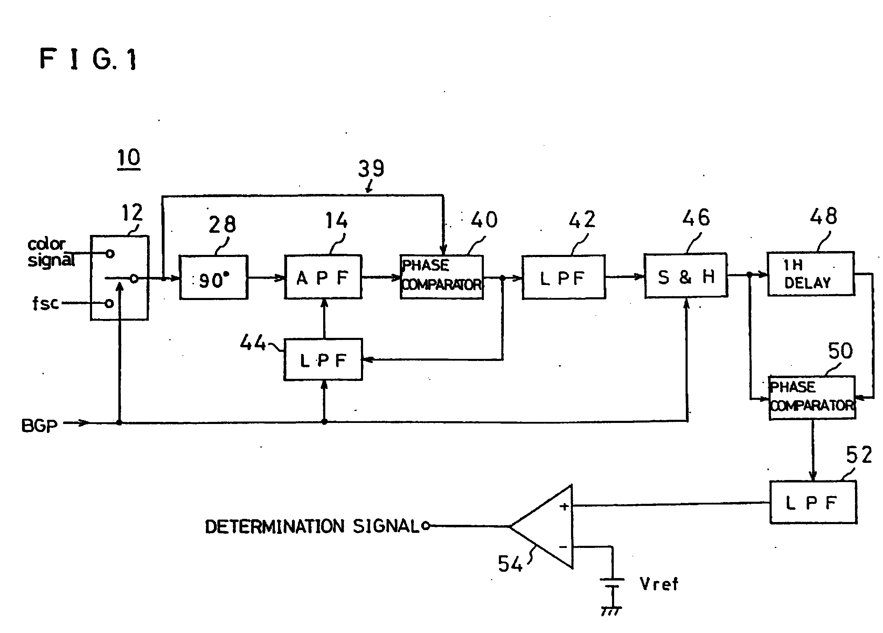

Referring to Figure 1, a television signal determination circuit 10 of this embodiment shown includes a multiplexer 12. A color signal and a frequency signal $f_{sc}$ are inputted to the multiplexer 12. The frequency signal $f_{sc}$ is a signal having a frequency equal to or in the vicinity of a sub-carrier frequency (4.43 MHz) of a PAL system or a sub-carrier frequency (4.40 MHz or 4.25 MHz) in a SECAM system, for example. In this embodiment shown, the frequency of the frequency signal $f_{sc}$ is set at 4.43 MHz equal to the sub-carrier frequency of the PAL system. Therefore, according to the embodiment, since the frequency signal of the PAL system can be utilized as it is, there is an advantage that it is not necessary to provide a specific signal generator separately. However, it is not necessary to say that the frequency of the frequency signal is not limited to 4.43 MHZ.

Then, to the multiplexer 12, a burst gate pulse (BGP) is further applied, and the color signal is outputted from the multiplexer 12 during a burst period that the burst gate pulse is applied, and the frequency signal $f_{sc}$ is outputted during a period other than the burst period. An output of the multiplexer 12 is applied to an all-pass filter (hereinafter, simply called as "APF") 14 having a relatively low quality factor (Q = 12, for example) via a 90° phase-shifter 28 (described later).

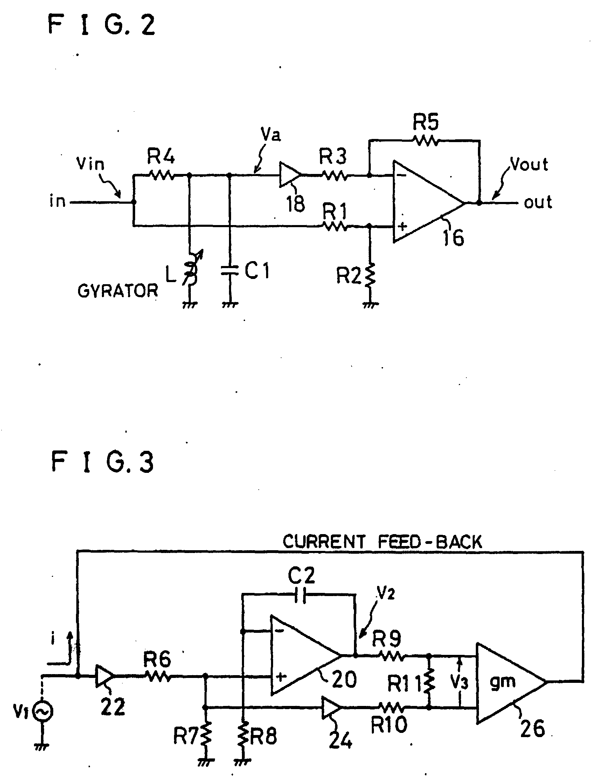

The APF 14 includes a differential amplifier 16 as shown in Figure 2, the output from the multiplexer 12 is applied to a (+) input of the differential amplifier 16 via a resister R1. One end of a resistor R2 is connected between the (+) input of the differential amplifier 16 and the resistor R1, and the other end of the resistor R2 is connected to the ground. Furthermore, to a (-) input of the differential amplifier 16, the output of the multiplexer 12 is applied through a series circuit of a resistor R3, a buffer 18 and a resistor R14. In addition, a parallel circuit of a gyrator L that is a variable inductor and a capacitor C1 is connected between the buffer 18 and the resistor R14, and one end of the parallel circuit is connected to the ground. That is, a bandpass filter is constructed by the resistor R4, the gyrator L and the capacitor C1, and the output through the bandpass filter is applied to the (-) input of the differential amplifier 16. Furthermore, to the (-) input of the differential amplifier 16, the output of the differential amplifier 16 is fed-back via a resistor R5. Therefore, a circuit shown in Figure 2 constitutes the APF 14 as a whole.

Then, on the assumption that an input voltage of the APF 14 is Vin, an input voltage of the buffer 18 is Va, and an output voltage of the APF 14 is Vout, the input voltage Va is represented by the following equation (1).

EP 0 614 320 B1

$$Va = \cfrac{\cfrac{\omega_0}{Q} \cdot s}{s^2 + \cfrac{\omega_0}{Q} \cdot s + \omega_0} \cdot Vin$$

$$\begin{cases} \omega_0 = \sqrt{\cfrac{1}{LC1}} \\ Q = R4 \cdot \sqrt{\cfrac{C1}{L}} \\ s = j\omega \end{cases} \quad\quad \cdots(1)$$

Furthermore, the output voltage Vout can be represented by the following equation (2).

$$Vout = \frac{R2}{R1 + R2} Vin \left[1 + \frac{R5}{R3}\right] - \frac{R5}{R3} Va \quad\quad (2)$$

Then, if R1 = 2 x R2 and R5 = 2 x R3, the output signal Vout is represented by the following equation (3).

$$Vout = Vin - 2Va = \frac{s^2 - \cfrac{\omega O}{Q} s + \omega O^2}{s^2 + \cfrac{\omega O}{Q} s + \omega O^2} Vin \quad\quad (3)$$

The equation (3) is representative of a transfer characteristic of the APF 14.

Furthermore, as the gyrator L utilized in the APF 14 shown in Figure 2, one that is shown in Figure 3, for example can be utilized.

The gyrator L shown in Figure 3 includes a differential amplifier 20. A series circuit of a resistor R6 and a buffer 22 is connected to a (+) input of the differential amplifier 20. Furthermore, one end of a resistor R4 is connected between the (+) input of the differential amplifier 20 and a resistor R6, and another end of the resistor R7 is connected to the ground. To a (-) input of the differential amplifier 20, one end of a resistor R3 having other end which is connected to the ground is connected, and an output of the differential amplifier 20 is fed-back to the (-) input via a capacitor C2. The output of the differential amplifier 20 is applied to one input of an amplifier 26 via a resistor R9, and a connection point of the (+) input of the differential amplifier 20 and the resistor R7 is connected to other input of the amplifier 26 via a series circuit of a buffer 24 and a resistor R10. In addition, a resistor R11 is connected between the one input and the other input of the amplifier 26. An output of the amplifier 26 is connected to an input of the buffer 22, to be fed-back as a current. On the assumption that an input signal applied to the buffer 22 is V1, an output signal of the differential amplifier 20 is V2, a signal representative of a voltage between both inputs of the amplifier 26 is V3, a current flowing in a current feeding-back path from the amplifier 26 is i, and an amplification factor of the amplifier 26 is gm, the following equations (4) and (5) can be obtained.

$$V2 = k1 \cdot V1 \left[1 + \frac{1}{sC2 \cdot R8}\right], \ k = \frac{R7}{R6 + R7} \quad\quad (4)$$

$$V3 = k2(V2 - k1 \cdot V1) = k1 \cdot k2 \frac{1}{sC2 \cdot R8} V1$$

$$k2 = \frac{R11}{R9 + R10 + R11} \quad\quad (5)$$

5

Therefore, the signal V3 becomes a signal having a phase delayed by 90 degrees in comparison with the input signal V1, and therefore, by feeding-back the signal V3 to the input of the buffer 22 as a current, the current i becomes to have a phase delayed by 90 degrees in comparison with the input signal V1 as shown by the following equation (6), and therefore, the gyrator forms equivalent inductance as shown by the following equation (7).

$$i = k1 \cdot k2 \, \frac{gm}{sC2 \cdot R8} \, V1 \qquad (6)$$

$$L = \frac{C2 \cdot R8}{k1 \cdot k2 \cdot gm} \qquad (7)$$

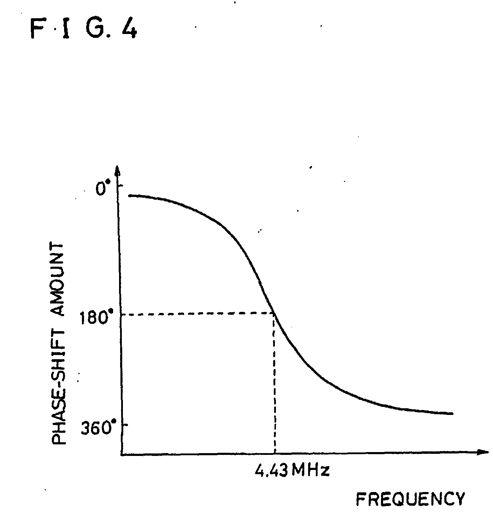

The APF 14 performs so-called frequency-phase conversion. In this embodiment, as shown in Figure 4, the sub-carrier frequency of 4.43 MHz is utilized as the reference frequency, and when a color signal having the sub-carrier frequency of 4.43 MHz is applied to the APF 14, the APF 14 phase-shifts the color signal by 180 degrees. Therefore, the sub-carrier frequency of the color signal applied to the APF 14 is not 4.43 MHz, a phase-shifting amount is deviated from 180 degrees in accordance with a difference between the frequency and 4.43 MHz.

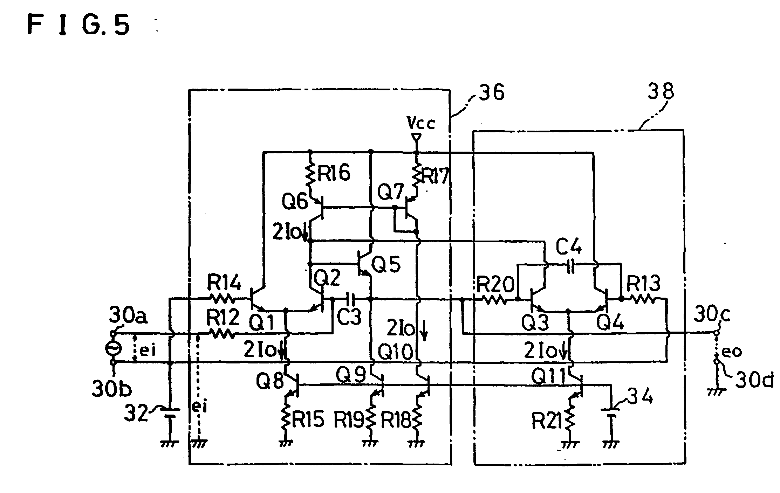

Returning to Figure 1, the 90° phase-shifter 28 is constructed as shown in Figure 5, for example. In the 90° phase-shifter 28 shown in Figure 5, an input end 30a is connected to a base of a transistor Q2 of transistors Q1 and Q2 which are connected to each other in a differential manner, via a resistor R12. An input end 30b is connected to a (+) terminal of a constant voltage source 32 having a (-) terminal which is connected to the ground, and the input end 30b is further connected to a base of a transistor Q4 of transistors Q3 and Q4 which are connected to each other in a differential manner, via a resistor R13, and further to a base of the transistor Q1 via a resistor R14. Emitters of the transistors Q1 and Q2 are commonly connected to the ground via a series circuit of a transistor Q8 and a resistor R15. A collector of the transistor Q1 is directly connected to a voltage source Vcc, and a collector of the transistor Q2 is connected to the voltage source Vcc via a series circuit of a transistor Q6 and a resistor R16. A connection point of the collector of the transistor Q2 and a collector of the transistor Q6 is connected to a base of the transistor Q5 and a collector of the transistor Q3.

A base of the transistor Q6 is connected to a base and a collector of a transistor Q7, and an emitter of the transistor Q7 is connected to the voltage source Vcc via a resistor R17. These transistors Q6 and Q7 constitute a current mirror circuit. The collector of the transistor Q7 is connected to the ground via a series circuit of a transistor Q10 and a resistor R10. The collector of the transistor Q5 is directly connected to the voltage source Vcc and an emitter thereof is connected to the ground through a series circuit of a transistor Q9 and a resistor R19.

The base of the transistor Q2 is connected to the base of the transistor Q3 via a series circuit of a capacitor C3 and a resistor R20. A connection point of the capacitor C3 and the resistor R20 is connected to an output end 30c. An output end 30d is connected to the ground. A capacitor C4 is inserted between the base of the transistor Q3 and the base of the transistor Q4, and emitters thereof are commonly connected to the ground through a series circuit of a transistor Q11 and a resistor R21. Bases of the transistors Q8, Q9, Q10 and Q11 are commonly connected to a (+) terminal of a constant voltage source 34 having a (-) terminal which is connected to the ground. That is, the 90° phase-shifter 28 includes an alternating current negative feed-back amplifier 36 including the transistors Q1 Q2, Q5, Q6, Q7, Q8, Q9 and Q10, and the resistor R12, the capacitor C3 and etc. which constitute a high-pass filter, and surrounded by a one-dotted line in Figure 5, and further having a direct current negative feed-back circuit 38 including the resistors R20 and R13 and the capacitor C4 which constitute a low-pass filter, and the transistors Q3 and Q4, and etc., and surrounded by a two-dotted line in Figure 5, the negative feed-back circuit 38 feeding a direct current voltage back to the negative feed-back amplifier 36.

In addition, the transistors Q8, Q9, Q10 and Q11 constitute a constant current source, and the resistors R15, R18 and R21 have the same resistance value. Therefore, collector currents of the transistors Q8, Q10 and Q11 are equal to each other, and therefore, if a current value of the collector current is 2Io, the collector current of the transistor Q6 becomes 2Io if the resistance values of the resistors R16 and R17 are the same resistance value because the transistors Q6 and Q7 constitute a current mirror circuit.

Next, an operation in an alternating current of the 90° phase-shifter 28 will be described. The base of the transistor Q1 is connected to the ground in an alternating current. The transistor Q6 functions as a load for withdrawing an output of the differential transistors Q1 and Q2 in a form of a current, and an alternating current load becomes a very large value, and therefore, an open loop gain A is sufficiently large. If the collector current of the transistor Q2 is changed, the base current of the transistor Q5 is also changed, whereby the output is withdrawn as a voltage by an emitter-follower of the transistor Q5. The output voltage $e_o$ outputted from the emitter-follower of the transistor Q5 is supplied to the high-pass filter composed of the capacitor C3 and the resistor R12. Therefore, the base voltage of the transistor Q2 is given by the following equation (8).

$$ei = \frac{1}{j\omega\ C3{\cdot}R12{+}1} + e_\theta\ \frac{j\omega\ C3{\cdot}R12}{j\omega\ C3{\cdot}R12{+}1} \qquad (8)$$

Then, the base voltage of the transistor Q1 is connected to the ground in an alternating current, the relationship between the input voltage $e_i$ and the output voltage $e_o$ is given by the following equation (9).

$$e_\theta = \{\emptyset - [e_i\ \frac{1}{j\omega\ C3{\cdot}R12{+}1} + e_\theta\ \frac{j\omega\ C3{\cdot}R12}{j\omega\ C3{\cdot}R12{+}1}]\}A \qquad (9)$$

Then, since the open loop gain A is sufficiently large, the equation (9) can be modified as the following equation (1∅), and therefore, it will be understood that a phase-shifting amount becomes 9∅ degrees.

$$-e_i = e_o\ [\frac{1}{A} + j\omega\ C3{\cdot}R12]$$

$$-e^i \fallingdotseq e_o\ j\omega\ C3 + R12 \qquad (10)$$

Next, an operation in a direct current will be described. The negative feeding-back in an alternating current is performed in the negative feed-back amplifier 36, but no direct current component is fed-back due to the capacitor C3. Therefore, the emitter voltage of the transistor Q5 becomes unstable, and therefore, the negative feed-back amplifier 36 does not operate. However, only a direct current component of the voltage outputted from the emitter-follower of the transistor Q5 is supplied to the low-pass filter of the resistors R2∅ and R13 and the capacitor C4, and to the base of the transistor Q3 of the transistors Q3 and Q4 which are connected to each other in a differential manner. A constant voltage is supplied to the base of the transistor Q4 from the constant voltage source 32, and therefore, if the base currents of the transistors Q3 and Q4 and a voltage drop due to the resistors R2∅ and R13 are ignored, a current division ratio of the collector current 2lo of the transistor Q11 is changed according to a difference of the both base voltages, and therefore, the collector current of the transistor Q3 is changed.

A direct current voltage at the bases of the transistor Q1 and Q2 is kept at a voltage of the constant voltage source 32, and therefore, if the base current of the transistors Q1 and Q2 and a voltage drop due to the resistors R12 and R14 are ignored, the collector currents respectively flowing through the transistors Q1 and Q2 becomes lo which is a half of the collector current 2lo of the transistor Q8.

Furthermore, since the collector current of the transistor Q6 becomes 2lo, if the base current of the transistor Q5 is small and can be ignored, the collector current of the transistor Q3 becomes lo that is obtained by subtracting the collector current of the transistor Q2 from the collector current of the transistor Q6. Then, a condition that the collector current of the transistor Q3 of the transistors Q3 and Q4 which are connected to each other in a differential manner becomes lo is that the base voltages of the transistors Q3 and Q4 must be equal to each other because the collector current of the transistor Q11 is 2lo, and therefore, since the direct current voltage of the emitter of the transistor Q5 is fixed at the voltage of the constant voltage source 32, and accordingly, the negative feed-back amplifier 36 can normally operate with an operating point of the voltage.

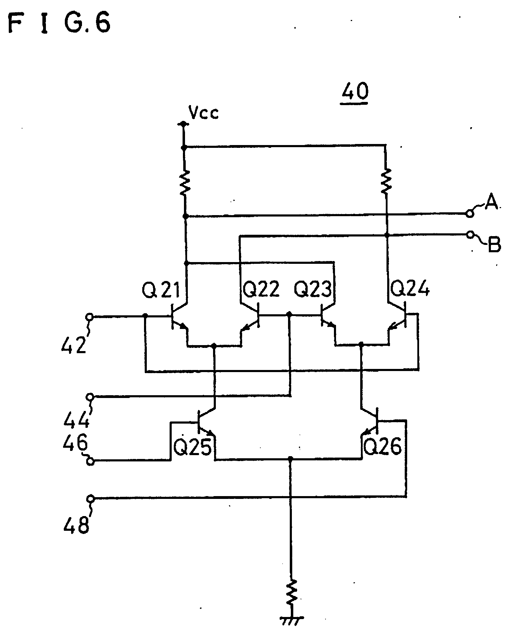

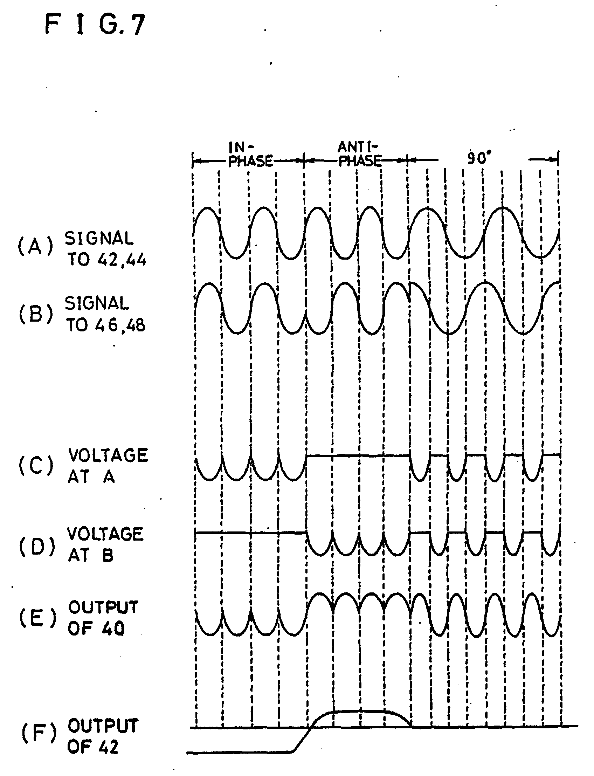

Returning to Figure 1, the signal having a phase delayed by the 9∅° phase-shifter 28 and the APF 14, and the signal from the multiplexer 12 through the path 39 are applied to a phase-comparator 4∅. The phase-comparator 4∅ is constructed as shown in Figure 6, and operates as shown in Figure 7.

That is, a signal shown in Figure 7(A) is inputted to input ends 42 and 44 shown in Figure 6, and a signal as shown in Figure 7(B) is inputted to input ends 46 and 48.

In a case where the both signals are in-phase, transistors Q21 and Q25 are turned-on during a positive period of the signal, and transistors Q23 and Q26 are turned-on during a negative period thereof. Therefore, a voltage at an output end A pulsates toward a negative direction at every half period as shown in Figure 7(C), and a voltage at an output end B becomes a constant voltage as shown in Figure 7(D). Accordingly, an output of the phase-comparator 4∅ which is drawn from the output ends A and B becomes a difference between Figure 7(C) and Figure 7(D), and thus, becomes as shown in Figure 7(E). Therefore, a low-pass filter (hereinafter, simply called as "LPF") 42 which receives the output of the phase-comparator 4∅ outputs a negative voltage signal as shown in Figure 7(F) when the both signals are in-phase.

In a case the both signals are anti-phase, the transistors Q24 and Q26 are turned-on during a positive period of the signal inputted to the input ends 42 and 44, and transistors Q22 and Q25 are turned-on during a negative period of the signal. Therefore, a voltage at the output end A becomes constant as shown in Figure 7(C), and a voltage at the output end B pulsates toward a negative direction at every half period as shown in Figure 7(D). Accordingly, the output of the phase-comparator 18 which is withdrawn from the output ends A and B is a difference between Figure 7(C) and Figure 7(D), and thus, becomes as shown in Figure 7(E). Therefore, the LPF 42 outputs a positive voltage signal as shown in Figure 7(F) when the both signals are anti-phase.

In a case where the both signals have a phase difference of 9Ø degrees, the transistors Q21 and Q25 are turned-on in a front half of a front half period of the signal from the input ends 42 and 44 as shown in Figure 7(A), and the transistors Q24 and Q26 are turned-on in a rear half of the front half period of the signal. Therefore, a voltage at the output end A becomes a negative voltage in only the front halves of the respective half periods as shown in Figure 7(C), and a voltage at the output end B appears as a negative voltage in the rear halves of the respective half periods as shown in Figure 7(D). Accordingly, the output of the phase-comparator 4Ø which is withdrawn from the output ends A and B becomes as shown in Figure 7(E), and the LPF 42 outputs a voltage signal of approximately zero as shown in Figure 7(F) when the both signals have a phase difference of 9Ø degrees.

Thus, when the phase difference of the both signals inputted to the phase-comparator 4Ø is 9Ø degrees, a voltage signal of approximately zero is outputted from the LPF 42. When the phase difference of the both signals is deviated from the 9Ø degrees, a positive or negative voltage signal according to a deviation amount is outputted from the LPF 42.

That is, in the phase-comparator 4Ø and the LPF 42, the input and output of the APF 14 are phase-compared, and the phase-voltage conversion is performed.

Furthermore, a control signal from the phase-comparator 4Ø as shown in Figure 7(F) is fed-back to the APF 14 via an LPF 44 provided for calibration. However, the LPF 44 does not output the voltage signal during the burst period and holds the same. By feeding the output from the phase-comparator 4Ø back to the APF 14 through the LPF 44, it is possible to make a phase delay operation of the APF 14 stable. More specifically, by applying the frequency signal of 4.43 MHz to the APF 14 during a period other than the burst period, the center frequency of the APF 14 is automatically adjusted to be coincident with 4.43 MHz, and therefore, when the color signal having the sub-carrier frequency of 4.43 MHz is applied to the APF 14, the phase is controlled in a manner that the phase difference of the input and the output becomes always -18Ø degrees, so that the center frequency adjustment can be performed.

That is, the phase-comparator 4Ø operates as for the television signal determination during the burst period, and as for the automatic adjustment of the center frequency of the APF 14 during a period other than the burst period.

Then, the voltage signal from the LPF 42 is applied to a sampling/holding circuit 46. The sampling/holding circuit 46 samples and holds the voltage signal from the LPF 42 during the burst period for 1H period by utilizing the burst gate pulse. More specifically, the burst gate pulse is applied to the sampling/holding circuit 46, and at a time point of a trailing edge of the burst gate pulse, for example, the sampling/holding circuit 46 samples and holds the voltage signal applied from the LPF 42 so as to produce a rectangular-wave signal which is applied to a 1H delay circuit 48 and a phase-comparator 5Ø. In the 1H delay circuit 48, the rectangular-wave signal is delayed by 1 horizontal line (1H), and thereafter, applied to the phase-comparator 5Ø. The phase-comparator 5Ø is constructed as similar to the phase-comparator 4Ø. Therefore, in the phase-comparator 5Ø, if a phase difference of two rectangular-wave signals is 18Ø degrees, a signal of the high level is outputted, and if the two rectangular-wave signals are in-phase, a signal of the low level is outputted.

Two rectangular-wave signals having a phase difference of 18Ø degrees are inputted to the phase-comparator 5Ø in the SECAM system, for example, and in the PAL system and the NTSC system, two rectangular-wave signals being in-phase are inputted to the phase-comparator 5Ø, for example. In a case of a black-white noise, two rectangular-wave signals having a random phase difference are inputted to the phase-comparator 5Ø. Therefore, the phase-comparator 5Ø outputs any one of signals having different levels according to the television system or the noise. Then, the signal is converted into a voltage signal having a level according to the level of the signal by an LPF 52. The voltage signal is applied to a level-comparator 54 having a hysteresis characteristic to be compared with a reference voltage Vref. If the voltage signal from the LPF 52 is larger than the reference voltage Vref, a determination signal of the high level is outputted at a TTL level from the level-comparator 54, and the voltage signal is smaller than the reference voltage, a determination signal of the low level is outputted. In accordance with such a determination signal, it becomes possible to determine whether a television system being received is any one of the SECAM system, and other PAL system or NTSC system. In addition, the level-comparator 54 has the hysteresis characteristic such that the determination signal outputted therefrom does not occur the chattering even if a signal that it is difficult to determine is inputted.

Then, determination operations of the above described television signal determination circuit 1Ø in the SECAM system and the PAL system will be described with referring to Figure 8 and Figure 9.

First, in a case of the SECAM system, operative wave-forms of respective portions become as shown in Figure 8.

A signal as shown in Figure 8(A) is outputted from the multiplexer 12. The multiplexer 12 outputs a color burst signal during the burst period so as to derive a sub-carrier frequency of the color signal. By outputting the color burst signal, the sub-carrier frequency of 4.25 MHz and 4.41 MHz are alternately derived at every two lines. Then, the multiplexer 12 outputs the frequency signal $f_{sc}$ during a period other than the burst period. The frequency signal $f_{sc}$ is set at 4.43 MHz in this embodiment shown. In addition, the burst gate pulse is shown in Figure 8(B). Then, a voltage signal as shown in Figure 8(C) is outputted from the LPF 42. The larger difference the frequency of 4.43 MHz being the reference frequency and the sub-carrier frequency, the larger amplitude of the voltage signal. That is, in a case where the sub-carrier frequency of the color signal is 4.25 MHz, the amplitude of the voltage signal becomes large, and in a case of 4.41 MHz, the amplitude of the voltage signal becomes small, and therefore, the voltage signal having two kinds of amplitudes is repeatedly outputted at every two horizontal lines. A rectangular-wave signal as shown in Figure 8(D) is outputted from the sampling/holding circuit 46 to which the voltage signal is inputted. The rectangular-wave signal is produced by sampling and holding the output of the LPF 42 at a time point of the trailing edge of the burst gate pulse. The rectangular-wave signal shown in Figure 8(D) repeats the high level and the low level at every two horizontal lines because the two kinds of sub-carrier frequencies are alternately outputted at every two horizontal lines in the SECAM system only. In addition, in the PAL system wherein the same sub-carrier frequency is outputted for each horizontal line, since the rectangular-wave signal (see Figure 9(D), described later) becomes the same wave-form for each horizontal line, and therefore, the SECAM system or the PAL system can be determined as described later. Then, the voltage signal of the high level as shown in Figure 8(E) is outputted from the phase-comparator.

On the other hand, in a case of the PAL system, operative wave-forms of respective portions become as shown in Figure 9.

At first, a signal as shown in Figure 9(A) is outputted from the multiplexer 12. To the multiplexer 12, a burst gate pulse shown in Figure 9(B) is applied, and therefore, the color burst signal of 4.43 MHz of the color signal is outputted during the burst period for each horizontal line. The multiplexer 12 outputs the frequency signal $f_{sc}$ during a period other than the burst period. Accordingly, the voltage signal as shown in Figure 9(C) is outputted from the LPF 42, and the rectangular-wave signal as shown in Figure 9D is outputted from the sampling/holding circuit 46 to which the voltage signal is inputted. Resultingly, the voltage signal of the low level as shown in Figure 9(E) is outputted from the phase-comparator 5Ø.

In addition, a noise (a) is included for each horizontal line in the voltage signal as shown in Figure 9(C), but the noise (a) is generated by a reason that the burst period generated by the burst gate pulse shown in Figure 9(B) is longer than a production period of the color burst signal shown in Figure 9(A).

As seen from the voltage signals respectively shown in Figure 8(E) and Figure 9(E), the levels of the voltage signals in the SECAM system and the PAL system are different from eac other, and therefore, the determination signal from the level-comparator 54 becomes the high level in the SECAM system, and the low level in the PAL system. That is, the determination signal from the level-comparator 54 is outputted as any one of signals different from each other in the SECAM system or the PAL system, and therefore, the both television systems can be determined on the basis of the output from the level-comparator 54.

By applying the frequency-phase characteristic of the APF 14 to the television signal determination circuit 1Ø, the circuit 1Ø can be constructed by utilizing a filter having a quality factor within a range capable of being incorporated in an integrated circuit.

Furthermore, it is not necessary to provide with a reference filter for filter calibration, only an APF for the signal determination may be provided. Therefore, in a case where a reference filter and another filter having the same structure as that of the reference filter are incorporated in the same integrated circuit, and by utilizing the reference filter, a filter characteristic (a center frequency, for example) of the filter such as the BPF is adjusted in the prior art, it was difficult to obtain a desired characteristic due to the deviation of the filter characteristics of the reference filter and the other filter, and therefore, the determination operation is affected by the characteristic deviation; however, according to the embodiment, such a problem does not occur.

Furthermore, by utilizing the APF 14 rather than the BPF which is utilized in the prior art, there is advantages as follows: The BPF utilized in the prior art is a ceramic filter having a quality factor $Q = 4\emptyset$, for example, and therefore, it was difficult to incorporate the BPF within the integrated circuit; however, the APF 14 can be easily incorporated in the integrated circuit. Furthermore, a phase variation rate with respect to a frequency of the APF 14 is double a phase variation rate of the BPF, and therefore, if the APF 14 is utilized, it is possible to make a detection sensitivity higher even if the filter having a low quality factor is used.

Furthermore, in order to incorporate the $f_H/2$ resonance filter utilized in the prior art in an integrated circuit, the inductor to be incorporated in the integrated circuit must be made larger, and therefore, the characteristic of the resonance filter affects the determination accuracy largely; however, in the present invention where no resonance filter is utilized, such a disadvantage does not occur.

In addition, the 1H delay circuit 48 utilized in the above described embodiment is constructed as shown in Figure 1Ø. The 1H delay circuit 48 shown in Figure 1Ø includes a multiplexer 66 which selects any one of two sampling/holding circuits 62 and 64 which are connected to the sampling/holding circuit 46. To the sampling/holding circuit 46, the burst gate pulse which becomes a control pulse CNT1 is applied, and to the multiplexer 66, a control pulse CNT4 of a rectangular-wave form that is obtained by 1/2 frequency-dividing the burst gate pulse by a frequency-divider 68. The control pulse CNT4 controls the switching operation of the multiplexer 66. Furthermore, to the sampling/holding circuits 62 and 64, control pulses CNT2 and CNT3 which are respectively in synchronization with the burst gate pulse BGP are alternately applied at every two lines.

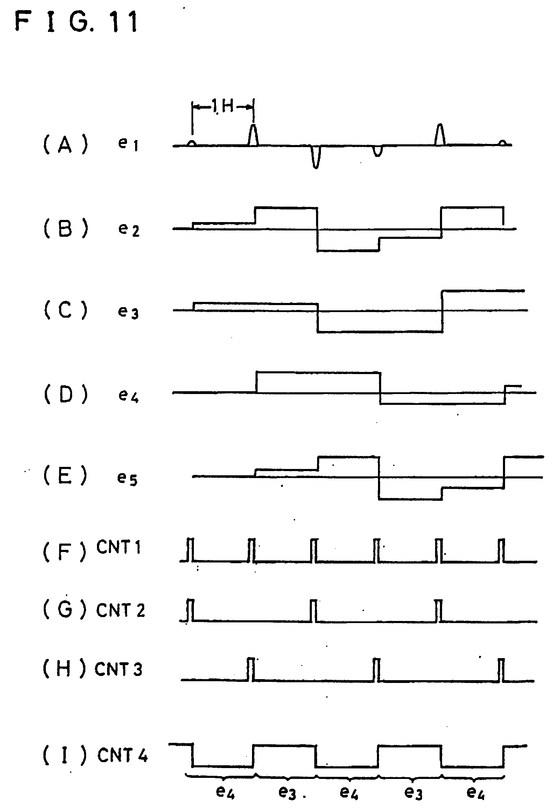

An operation of the 1H delay circuit 48 will be described with referring to Figure 11.

When a voltage signal $e_1$ from the LPF 42 and as shown in Figure 11(A) is applied for each line to an input end 7Ø, the sampling/holding circuit 46 outputs a rectangular-wave signal $e_2$ as shown in Figure 11(B), in accordance with a timing of the control pulse CNT1 shown in Figure 11(F). The rectangular-wave signal $e_2$ is applied to the sampling/holding circuits 62 and 64, respectively. To the sampling/holding circuits 62 and 64, the control pulses CNT2 and CNT3 shown in Figure 11(G) and Figure 11(H) are applied, respectively, and the sampling/holding circuits 62 and 64 output rectangular-wave signals $e_3$ and $e_4$ shown in Figure 11(C) and Figure 11(D) in response to the control pulses CNT2 and CNT3. Then, to the multiplexer 66, the control pulse CNT4 shown in Figure 11(I) is applied, and in response to the control pulse CNT4, the multiplexer 66 is switching-controlled at every line so as to select the rectangular-wave signals $e_4$ and $e_3$, and therefore, the rectangular-wave signal $e_5$ shown in Figure 11(E) is outputted from an output end 72.

As seen from comparison of the rectangular-wave signals $e_2$ and $e_5$ respectively shown in Figure 11(B) and Figure 11(E), the rectangular-wave signal es shown in Figure 11(E) is delayed by one horizontal line (1H) in comparison with the rectangular-wave signal $e_2$ shown in Figure 11(B).

In addition, in Figure 1 embodiment, the 90° phase-shifter 28 may be inserted in the path 39, and the same may be inserted between the APF 14 and the phase-comparator 4Ø.

Furthermore, in Figure 1 embodiment, the 90° phase-shifter 28 is utilized such that the phase difference of the two inputs applied to the phase-comparator 4Ø becomes 8Ø degrees when the frequency signal $f_{sc}$ of 4.43 MHz is inputted to the APF 14; however, if the phase difference of the two inputs to the phase-comparator 4Ø becomes 9Ø degrees, an arbitrary means other than the 90° phase-shifter 28 can be utilized. For example, one input to the phase-comparator 4Ø is delayed by 45° degrees by utilizing a 45° phase-shifter instead of the 90° phase-shifter 28, and a 45° phase-shifter inserted in the path 39 to advance the other input to the phase-comparator 4Ø by 45 degrees. In such a case, the phase difference of the two inputs becomes 9Ø degrees.

In Figure 1 embodiment, a charging/discharging time constant of the sampling/holding circuit 46 is to be made a short time constant such that the charging/discharging are completely performed within the burst gate pulse period. Because if the time constant is made long, the charging/discharging are not completed to a predetermined level within the burst gate pulse period since a holding level is largely changed at every two horizontal lines in the SECAM system, and therefore, the determination sensitivity of the television signal of the SECAM system becomes poor. Accordingly, the time constant of the sampling/holding circuit 46 is to be made short. However, if the time constant of the sampling/holding circuit 46 is made short, the influence due to a noise, cross-talk component and etc. is easily affected, and therefore, a frequency of such a noise may be held other than the burst frequency. Especially, in the PAL system, there is no signal at a rear end of the burst signal, and therefore, the holding level is easily affected by the noise, cross-talk component and etc. existing in this portion, and therefore, a chance that the SECAM signal is erroneously determined while the television signal is of the PAL system is increased.

Therefore, in an embodiment described in the following, an erroneous operation due to a noise, cross-talk component can be suppressed.

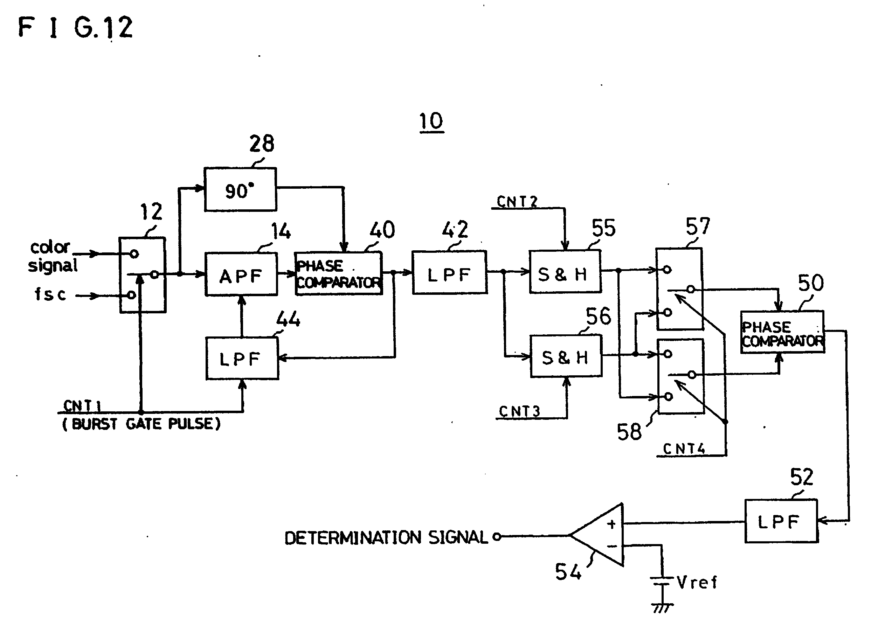

As similar to Figure 1 embodiment, a television signal determination circuit 1Ø of another embodiment shown in Figure 12 includes the multiplexer 12, APF 14, 90° phase-shifter 28, phase-comparator 4Ø, and LPF 42 and 44. Therefore, duplicate descriptions of such components are omitted here.

The voltage signal from the LPF 42 is applied to a sampling/holding circuits 55 and 56 having the same characteristic. The sampling/holding circuits 55 and 56 hold the voltage signal from the LPF 42 for 2H period by utilizing the burst gate pulses which have 2H intervals and are deviated from each other by 1H.

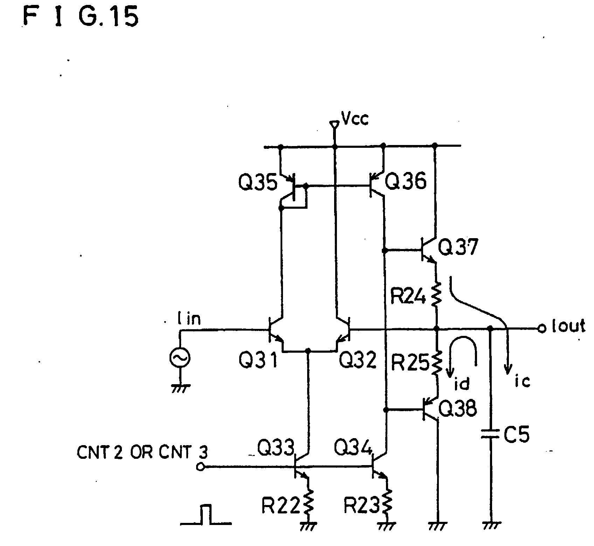

Now, the sampling/holding circuit is constructed as shown in Figure 15, for example.

If the input voltage $e_{in}$ > the output voltage $e_{out}$, a current $i_c$ flows into the capacitor C5 via a resistor R24 from an emitter of a transistor Q37, so that the capacitor C5 is charged and the output voltage $e_{out}$ increases. In such a case, a charging time constant $\tau$ C becomes R24·C5 seconds.

Next, if $e_{in} < e_{out}$, a current from the capacitor C5 flows to a transistor Q38 through a resistor R25, so that the capacitor C5 is discharged and the output voltage $e_{out}$ decreases. In such a case, a discharging time constant becomes R25·C5 seconds. If the discharging time constant is set to be longer than the charging time constant, it is possible to implement a desired peak holding circuit.

Then, signals held by the sampling/holding circuits 55 and 56 are alternately outputted from multiplexers 57 and 58 at every two horizontal lines. The multiplexers 57 and 58 are controlled by a control signal CNT4 such that the multiplexers 57 and 58 always select held signals in reciprocity. The signals from the multiplexers 57 and 58 are applied to the phase-comparator 5Ø which is constructed as similar to the phase-comparator 4Ø. Then, the phase-comparator 5Ø outputs a signal of the high level if a phase difference of the both signals is 18Ø degrees, and a signal of the low level if the both signals in-phase.

To the phase-comparator 50, signals having the phase difference of 18Ø degrees are inputted in the SECAM system, and only a direct current component is inputted in the PAL system or the NTSC system, and signals having a random phase difference are inputted in a case of a black-white noise, and therefore, the phase-comparator 50 outputs the signal having a different level. Then, the signal is converted into a voltage signal having a level according to the level of the signal by an LPF 52. The voltage signal is applied to the level-comparator 54 having a hysteresis characteristic to be compared with the reference voltage Vref. If the voltage signal from the LPF 52 is larger than the reference voltage Vref a determination signal of the high level, and if the voltage signal is smaller than the reference voltage Vref a determination signal of the low level are respectively outputted from the level-comparator 54 at a TTL level. According to the determination signal, it is possible to determine whether a television system being received is the SECAM system or not.

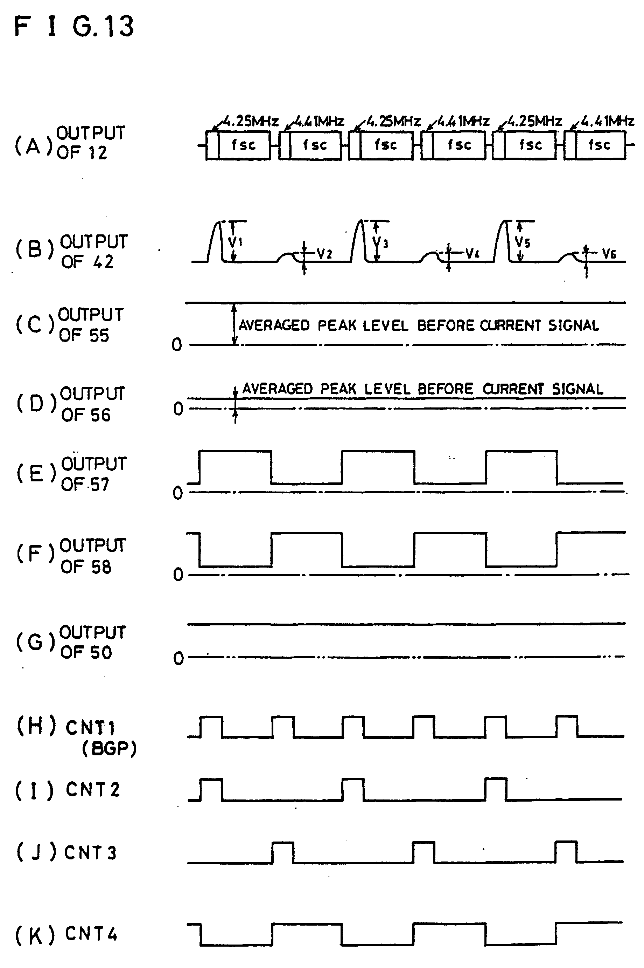

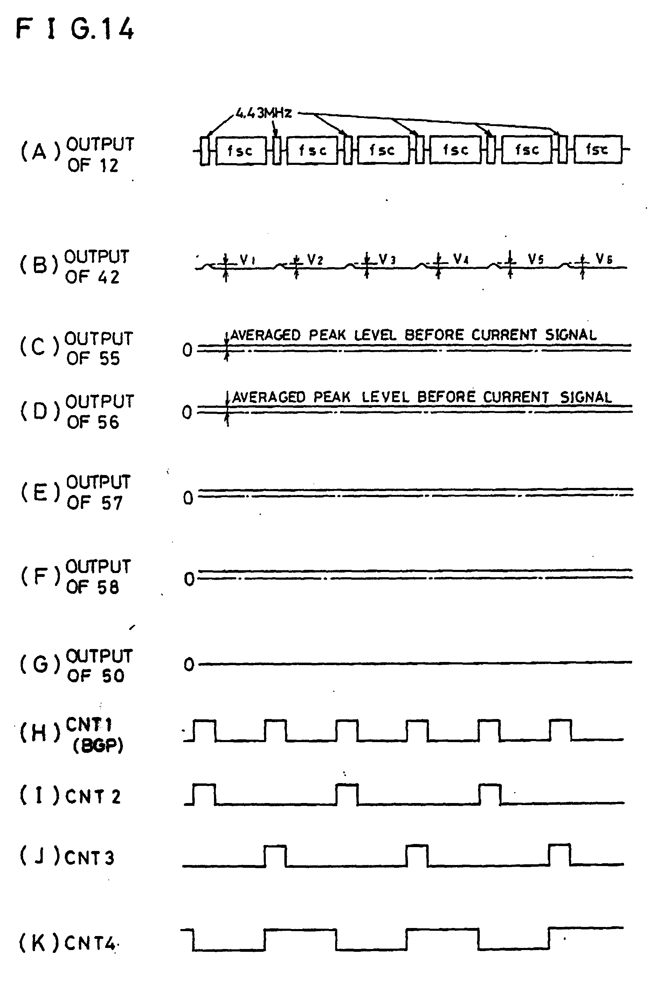

Then, determination operations of the above described television signal determination circuit 10 in the SECAM system and the PAL system will be described with referring to Figure 13 and Figure 14.

First, in a case of the SECAM system, operative wave-forms of respective portions become as shown in Figure 13.

A signal as shown in Figure 13(A) is outputted from the multiplexer 12. The multiplexer 12 outputs a color burst signal during the burst period so as to derive a sub-carrier frequency of the color signal. By outputting the color burst signal, the sub-carrier frequency of 4.25 MHz and 4.41 MHz are alternately derived at every two lines. Then, the multiplexer 12 outputs the frequency signal $f_{sc}$ during a period other than the burst period. The frequency signal $f_{sc}$ is set at 4.43 MHz in this embodiment shown.

In addition, the burst gate pulse is shown in Figure 13(B). Then, a voltage signal as shown in Figure 13(C) is outputted from the LPF 42. The larger frequency difference between the frequency of 4.43 MHz being a reference frequency and the sub-carrier frequency, the larger voltage signal. That is, in a case where the sub-carrier frequency of the color signal is 4.25 MHz, the amplitude of the voltage signal becomes large, and in a case of 4.41 MHz, the amplitude of the voltage signal becomes small, and therefore, the voltage signal having two kinds of amplitudes is repeatedly outputted at every two horizontal lines. A rectangular-wave signal as shown in Figure 13(D) is outputted from the sampling/holding circuit 46 to which the voltage signal is inputted.

Wave-forms shown in Figure 13(C) and Figure 13(D) are outputted from sampling/holding circuits 55 and 56 to which the voltage signal is inputted. Then, the sampling/holding circuit 55 is controlled by a control signal CNT2 shown in Figure 13(I). In addition, since the time constant of the sampling/holding circuit 55 is set long, few or several 10H, for example, and therefore, the signal outputted from the sampling/holding circuit 55 is a signal having an average peak level of the past few or several 10 horizontal lines including the current line (Figure 13(B)). That is, if v3 of Figure 13(B) becomes zero due to the influence of the noise or the like, Figure 13(C) is not affected.

On the other hand, the sampling/holding circuit 56 is controlled by a control signal CNT3 shown in Figure 13 (J). An operation of the sampling/holding circuit 56 is similar to that of the sampling/holding circuit 55.

Then, the signals shown in Figure 13(C) and Figure 13(D) are inputted to multiplexers 57 and 58. The multiplexer 57 selects the signal shown in Figure 13(C) at a timing that the control signal CNT4 shown in Figure 13(K) is the low level, and the signal shown in Figure 13(D) at a timing that the control signal CNT4 is the high level. On the other hand, the multiplexer 58 is operated such that the signal shown in Figure 13(D) is selected at a timing that the control signal CNT4 is the low level and the signal shown in Figure 13(C) is selected at a timing that the control signal CNT4 is the high level. Wave-forms of the outputs of the multiplexers 57 and 58 are illustrated in Figure 13(E) and Figure 13(F).

Now, the signals shown in Figure 13(E) and Figure 13(F) are signals which repeat alternately the high level and the low level at every two lines, and have a phase difference of 180 degrees. Because the two kinds of sub-carrier frequencies are alternately outputted at every two lines in the SECAM system only.

On the other hand, in a case of the PAL system, operative wave-forms of respective portions become as shown in Figure 14.

At first, a signal as shown in Figure 9(A) is outputted from the multiplexer 12. In a case of PAL system, as different from SECAM system, since the sub-carrier frequency is the same for each line, no level difference occurs between the both signals as shown in Figure 14(B). Therefore, the output signals of the sampling/holding circuits 55 and 56 become equal to each other as shown in Figure 14(C) and Figure 14(D), and therefore, even if the output signals are selected by the multiplexers 57 and 58 alternately, no level difference occurs in the outputs of the multiplexers 57 and 58 as different from a case of the SECAM system, and accordingly, only a direct current signal having a constant level is outputted as shown in Figure 14(F).

As a result, two input signals to the above described phase-comparator 50 (Figure 14(E) and Figure 14(F)) are signals of the constant levels as shown in Figure 14(G), and therefore, the output signal from the phase-comparator 50 becomes zero.

As seen from the voltage signals respectively shown in Figure 13(G) and Figure 14(G), the levels of the voltage signals in the SECAM system and the PAL system are different from eac other, and therefore, the determination signal from the level-comparator 54 becomes the high level in the SECAM system, and the low level in the PAL system.

In addition, in Figure 12 embodiment, the 90° phase-shifter 28 may be inserted in the path 39, and the same may be inserted between the APF 14 and the phase-comparator 40. In addition, the two inputs to the phased-comparator 40 may be applied as shown in Figure 12 at a timing of the center frequency calibration of the APF 14, and two inputs may be supplied from the input and output portions of the APF 14 at a timing of the signal determination (burst gate pulse period).

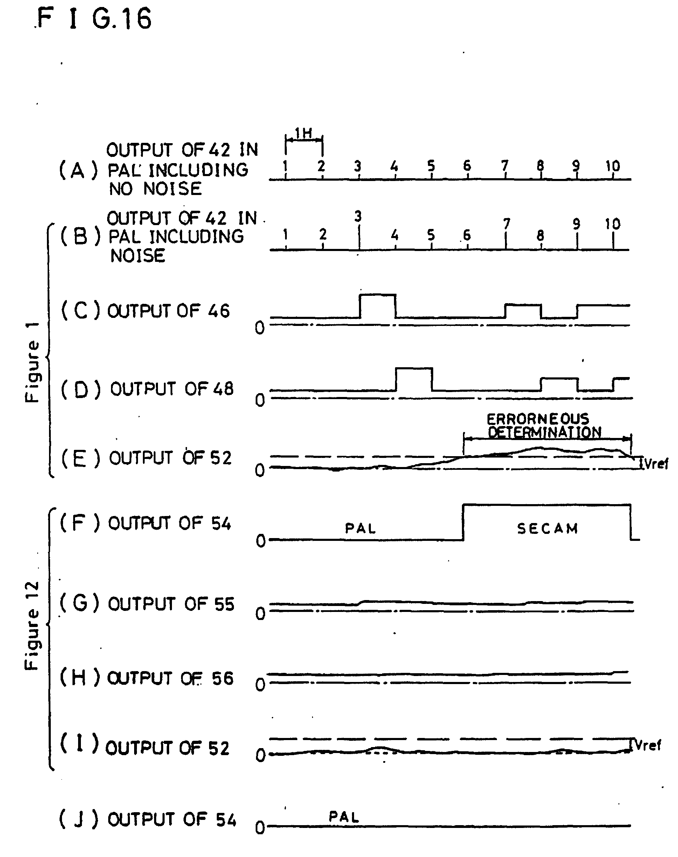

Next, an operation of Figure 12 embodiment at a time that the PAL signal including a noise or a cross-talk component is inputted to the embodiment will be described with referring to Figure 16 and in comparison with Figure 1 embodiment.

Figure 16(A) indicates an output wave-form of the LPF 42 when the PAL signal not including a noise is inputted. In this case, Figure 1 embodiment as well as Figure 12 embodiment normally determine PAL signal because the level difference between the horizontal lines hardly exists. On the other hand, Figure 16(B) indicates an output wave-form of the LPF 42 at a time that PAL signal including a large number of noises is inputted to the embodiment. In this case, as different from the case of Figure 16(A), the level difference occurs in detection outputs of the burst frequency for each line. Therefore, in a case of the signals of Figure 16(B), wave-forms of the respective portions of the Figure 1 embodiment becomes Figure 16(C) - Figure 16(F).

As seen from Figure 16, there is a case where the phase difference of the signals which are corresponding to the input signals to the phase-comparator 50 of Figure 1 and shown in Figure 16(C) and Figure 16(D) becomes 180 degrees. Therefore, as shown in Figure 16(E), the output level of the LPF 52 increases so that the same exceeds the reference voltage Vref of the level-comparator 54, and the determination signal of the SECAM system is erroneously outputted.

On the other hand, in a case of Figure 12 embodiment, wave-forms of respective portions become Figure 16 (G) - Figure 16(J). Figure 16(G) indicates the output wave-form of the sampling/holding circuit 55 of Figure 12 embodiment, and the output of the sampling/holding circuit 55 is obtained by averaging the peaks of the signals of the odd number lines of Figure 16(B). Figure 16(H) indicates the wave-form of the output of the sampling/holding circuit 56, which is obtained by averaging peaks of the signals of the even number lines of Figure 16(B).

As seen from the wave-forms shown in Figure 16(G) and Figure 16(H), the time constants of the sampling/holding circuits 55 and 56 are set longer such that the circuits 55 and 56 outputs signals having the level that is obtained by averaging the peaks of the output signal from the LPF 42 for few or several 10H, and therefore, the influence due to the variation of the output level of the LPF 42 for few or several H becomes very small. Therefore, the output level of the LPF 52 does not exceed the threshold voltage Vref, and therefore, the output from the level-comparator 54 becomes the low level stably, and therefore, a normal determination signal of the PAL system is obtained.

In addition, the above described embodiments are applied to a case where the SECAM system or the PAL system is to be determined, but the present invention may be applied to the determination of the SECAM system or the NTSC system.

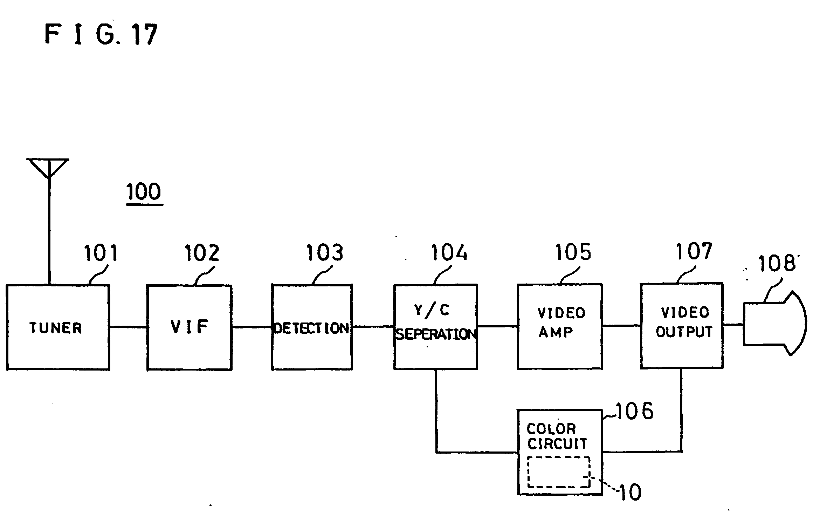

The television signal determination circuit 10 shown in Figure 1 or Figure 12 is incorporated in a color circuit 106 which is increased in a television receiver or a television signal recording/reproducing apparatus 100 shown in Figure 17. More specifically, the television receiver or the apparatus 100 includes a tuner 101 which receives an electromagnetic wave from antenna and outputs a video intermediate frequency signal, and the video intermediate frequency (VIF) signal from the tuner 101 is applied to a VIF circuit 102 to be amplified. The VIF signal from the VIF circuit 102 is detected by a detection circuit 103. An output from the detection circuit 103 is inputted to a Y/C separation circuit 104. The Y/C separation circuit 104 separates a luminance signal (Y signal) component and a color signal (C signal) component from a video signal detected. The luminance signal separated by the Y/C separation circuit 104 is amplified by a video amplifier 105. The color signal separated by the Y/C separation circuit 104 is inputted to the color circuit 106. The color circuit 106 includes the television signal determination circuit 10, and the SECAM system or the PAL system, for example, is changed in response to the determination output from the determination circuit 10. More specifically, in response to the determination output, the control such as the changing of the frequency of the sub-carrier oscillator, for example, may be performed. In addition, if the determination signal indicative of the PAL system is outputted, the burst phase is changed in a color demodulation circuit (not shown). Thus, in response to the determination signal from the television signal determination circuit 10, a color demodulation operation is switched. Then, the color signal component from the color circuit 106 is applied to a video output circuit 107 together with the luminance signal component, and therefore, a television video image is displayed on a television monitor 108 by the video output circuit 107.

## Claims

1. A PAL/SECAM television signal determination circuit (10), comprising:

voltage signal outputting means (12) for outputting a voltage signal having a level according to a sub-carrier frequency (fsc) of an input color signal;

signal holding means (46) for holding said voltage signal during one horizontal line period to obtain a held signal;

delay means (48) for delaying said held signal for one horizontal line, said delay means (48) including first and second sampling and holding means (62, 64) for alternately sampling and holding said held signal during two horizontal lines, respectively, to produce a first and second rectangular-wave signals;

switching means (66) for alternately outputting the first and second rectangular-wave signals for one horizontal line; and

determination signal outputting means (50, 52, 54) for outputting a determination signal on the basis of said held signal and the output from said switching means (66), said determination signal outputting means (50, 52, 54) including a phase comparator (50) which receives the held signal and said output of said switching means (66), a low-pass filter (52) which converts the ouput of the phase comparator (50) into a voltage signal, and a voltage comparator (54) which compares said voltage signal with a reference voltage ($V_{ref}$) and produces said determination signal indicative of the television signal.

2. A PAL/SECAM television signal determination circuit (10) according to claim 1, wherein said voltage signal outputting means (12) includes first means for outputting the sub-carrier frequency (fsc) as a signal representative of a phase, and second means for converting said signal representative of phase into the voltage signal.

3. A PAL/SECAM television signal determination circuit (10) according to claim 2, wherein said first means (12) includes an all-pass filter (14).

4. A PAL/SECAM television signal determination circuit (10) according to claim 3, wherein said all-pass filter (14) includes a frequency variable all-pass filter having an adjustable center frequency, said circuit (10) further comprising:

signal generating means for generating a frequency signal having a predetermined frequency equal to said sub-carrier frequency (fsc) or in the vicinity of said sub-carrier frequency (fsc),

first switching means for applying said input color signal to said frequency variable all-pass filter during a burst period and said frequency signal to said frequency variable all-pass filter during a period other than the burst period; and

control means for controlling the center frequency of said frequency variable all-pass filter on the basis of said signal representative of phase obtained during a period other than said burst period.

5. A PAL/SECAM television signal determination circuit (10) according to any one of claims 1 to 4, wherein said delay means (48) includes a sampling and holding circuit (46) for sampling and holding said voltage signal during the burst period.

6. A PAL/SECAM television signal determination circuit (10) according to claim 1 wherein said first and second sampling and holding means (62, 64) output an average level of peak values of said voltage signal, and control pulses supplied to said first and second sampling and holding means (62, 64) are pulse signals having two horizontal line period intervals and being deviated from each other by one horizontal line period.

7. A television receiver capable of receiving a television signal of a SECAM system at least, comprising:

voltage signal outputting means (12) for outputting a voltage signal having a level according to a sub-carrier frequency (fsc) of an input color signal;

signal holding means (46) for holding said voltage signal during one horizontal line period to obtain a held signal;

delay means (48) for delaying said held signal for one horizontal line, said delay means (48) including first and second sampling and holding means (62, 64) for alternately sampling and holding said held signal during two horizontal lines, respectively, to produce a first and second rectangular-wave signals;

switching means (66) for alternately outputting the first and second rectangular-wave signals for one horizontal line; and

determination signal outputting means (50, 52, 54) for outputting a determination signal on the basis of said held signal and the output from said switching means (66), said determination signal outputting means (50, 52, 54) including a phase comparator (50) which receives the held signal and said output of said switching means (66), a low-pass filter (52) which converts the ouput of the phase comparator (50) into a voltage signal, and a voltage comparator (54) which compares said voltage signal with a reference voltage ($V_{ref}$) and produces said determination signal indicative of the television signal.

8. A television signal recording/reproducing apparatus (100) capable of receiving a television signal of a SECAM system at least, comprising:

voltage signal outputting means (12) for outputting a voltage signal having a level according to a sub-carrier frequency (fsc) of an input color signal;

signal holding means (46) for holding said voltage signal during one horizontal line period to obtain a held signal;

delay means (48) for delaying said held signal for one horizontal line, said delay means (48) including first and second sampling and holding means (62, 64) for alternately sampling and holding said held signal during two horizontal lines, respectively, to produce a first and second rectangular-wave signals;

switching means (66) for alternately outputting the first and second rectangular-wave signals for one horizontal line; and

determination signal outputting means (50, 52, 54) for outputting a determination signal on the basis of said held signal and the output from said switching means (66), said determination signal outputting means (50, 52, 54) including a phase comparator (50) which receives the held signal and said output of said switching means (66), a low-pass filter (52) which converts the ouput of the phase comparator (50) into a voltage signal, and a voltage comparator (54) which compares said voltage signal with a reference voltage ($V_{ref}$) and produces said determination signal indicative of the television signal.

**Patentansprüche**

1. PAL/SECAM-Fernsehsignal-Bestimmungsschaltung (10), welche aufweist:

ein Spannungssignal-Ausgabemittel (12) zum Ausgeben eines Spannungssignals mit einem Pegel entsprechend einer Unterträger-Frequenz (fsc) eines Eingabe-Farbsignals;

ein Signal-Haltemittel (46) zum Halten des Spannungssignals während einer horizontalen Zeilenperiode, um ein gehaltenes Signal zu erhalten;

ein Verzögerungsmittel (48) zum Verzögern des gehaltenen Signals für eine horizontale Zeile, wobei das Verzögerungsmittel (48) ein erstes und ein zweites Abtast- und Haltemittel (62, 64) enthält zum abwechselnden Abtasten und Halten des gehaltenen Signals jeweils während zwei horizontaler Zeilen, um ein erstes und ein zweites Rechtecksignal zu erzeugen;

ein Umschaltmittel (66) zum abwechselnden Ausgeben des ersten und des zweiten Rechtecksignals für eine horizontale Zeile; und

ein Bestimmungssignal-Ausgabemittel (50, 52, 54) zum Ausgeben eines Bestimmungssignals auf der Grundlage des gehaltenen Signals und der Ausgabe von dem Umschaltmittel (66), wobei das Bestimmungssignal-Ausgabemittel (50, 52, 54) einen Phasenkomparator (50), welcher das gehaltene Signal und die Ausgabe des Umschaltmittels (66) empfängt; ein Tiefpass-Filter (52), welches die Ausgabe des Phasenkomparators (50) in ein Spannungssignal umwandelt; und einen Spannungskomparator (54), welcher das Spannungssignal mit einer Referenzspannung ($V_{ref}$) vergleicht und das das Fernsehsignal kennzeichnende Bestimmungssignal erzeugt, enthält.

2. PAL/SECAM-Fernsehsignal-Bestimmungsschaltung (10) nach Anspruch 1, bei welcher das Spannungssignal-Ausgabemittel (12) ein erstes Mittel zum Ausgeben der Unterträger-Frequenz (fsc) als ein für eine Phase repräsentatives Signal; und ein zweites Mittel zum Umwandeln des für die Phase repräsentativen Signals in das Spannungssignal enthält.

3. PAL/SECAM-Fernsehsignal-Bestimmungsschaltung (10) nach Anspruch 2, bei welcher das erste Mittel (12) ein Allpass-Filter (14) enthält.

4. PAL/SECAM-Fernsehsignal-Bestimmungsschaltung (10) nach Anspruch 3, bei welcher das Allpass-Filter (14) ein frequenzvariables Allpass-Filter mit einer einstellbaren Mittenfrequenz enthält, wobei die Schaltung (10) weiterhin aufweist:

   ein Signal-Erzeugungsmittel zum Erzeugen eines Frequenzsignals mit einer vorbestimmten Frequenz, die gleich der Unterträger-Frequenz (fsc) ist oder in der Umgebung der Unterträger-Frequenz (fsc) liegt;

   ein erstes Umschaltmittel zum Anlegen des Eingabe-Farbsignals an das frequenzvariable Allpass-Filter während einer Farbsynchronimpuls-Periode und des Frequenzsignals an das frequenzvariable Allpass-Filter während einer von der Farbsynchronimpuls-Periode verschiedenen Periode; und

   ein Steuerungsmittel zum Steuern der Mittenfrequenz des frequenzvariablen Allpass-Filters auf der Grundlage des für die Phase repräsentativen Signals, welches in einer von der Farbsynchronimpuls-Periode verschiedenen Periode gewonnen wird.

5. PAL/SECAM-Fernsehsignal-Bestimmungsschaltung (10) nach einem der Ansprüche 1 bis 4, bei welcher das Verzögerungsmittel (48) eine Abtast- und Halteschaltung (46) zum Abtasten und Halten des Spannungssignals während der Farbsynchronimpuls-Periode enthält.

6. PAL/SECAM-Fernsehsignal-Bestimmungsschaltung (10) nach Anspruch 1, bei welcher das erste und das zweite Abtast- und Haltemittel (62, 64) einen mittleren Pegel von Spitzenwerten des Spannungssignals ausgeben und wobei dem ersten und dem zweiten Abtast- und Haltemittel (62, 64) zugeführte Steuerungsimpulse Impulssignale sind, welche zwei horizontale Zeilenperioden-Intervalle haben und voneinander um eine horizontale Zeilenperiode abweichen.

7. Fernsehempfänger, welcher zumindest ein Fernsehsignal eines SECAM-Systems empfangen kann und welcher aufweist:

   ein Spannungssignal-Ausgabemittel (12) zum Ausgeben eines Spannungssignals mit einem Pegel entsprechend einer Unterträger-Frequenz (fsc) eines Eingabe-Farbsignals;

   ein Signal-Haltemittel (46) zum Halten des Spannungssignals während einer horizontalen Zeilenperiode, um ein gehaltenes Signal zu erhalten;

   ein Verzögerungsmittel (48) zum Verzögern des gehaltenen Signals für eine horizontale Zeile, wobei das Verzögerungsmittel (48) ein erstes und ein zweites Abtast- und Haltemittel (62, 64) enthält zum abwechselnden Abtasten und Halten des gehaltenen Signals jeweils während zwei horizontaler Zeilen, um ein erstes und ein zweites Rechtecksignal zu erzeugen;

   ein Umschaltmittel (66) zum abwechselnden Ausgeben des ersten und des zweiten Rechtecksignals für eine horizontale Zeile; und

   ein Bestimmungssignal-Ausgabemittel (50, 52, 54) zum Ausgeben eines Bestimmungssignals auf der Grundlage des gehaltenen Signals und der Ausgabe von dem Umschaltmittel (66), wobei das Bestimmungssignal-Ausgabemittel (50, 52, 54) einen Phasenkomparator (50), welcher das gehaltene Signal und die Ausgabe des Umschaltmittels (66) empfängt; ein Tiefpass-Filter (52), welches die Ausgabe des Phasenkomparators (50) in ein Spannungssignal umwandelt; und einen Spannungskomparator (54), welcher das Spannungssignal mit einer Referenzspannung ($V_{ref}$) vergleicht und das das Fernsehsignal kennzeichnende Bestimmungssignal erzeugt, enthält.

8. Fernsehsignal-Aufzeichnungs-/Wiedergabegerät (100), welches zumindest ein Fernsehsignal eines SECAM-Systems empfangen kann und welches aufweist:

   ein Spannungssignal-Ausgabemittel (12) zum Ausgeben eines Spannungssignals mit einem Pegel entsprechend einer Unterträger-Frequenz (fsc) eines Eingabe-Farbsignals;

   ein Signal-Haltemittel (46) zum Halten des Spannungssignals während einer horizontalen Zeilenperiode, um ein gehaltenes Signal zu erhalten;

ein Verzögerungsmittel (48) zum Verzögern des gehaltenen Signals für eine horizontale Zeile, wobei das Verzögerungsmittel (48) ein erstes und ein zweites Abtast- und Haltemittel (62, 64) enthält zum abwechselnden Abtasten und Halten des gehaltenen Signals jeweils während zwei horizontaler Zeilen, um ein erstes und ein zweites Rechtecksignal zu erzeugen;

ein Umschaltmittel (66) zum abwechselnden Ausgeben des ersten und des zweiten Rechtecksignals für eine horizontale Zeile; und

ein Bestimmungssignal-Ausgabemittel (50, 52, 54) zum Ausgeben eines Bestimmungssignals auf der Grundlage des gehaltenen Signals und der Ausgabe von dem Umschaltmittel (66), wobei das Bestimmungssignal-Ausgabemittel (50, 52, 54) einen Phasenkomparator (50), welcher das gehaltene Signal und die Ausgabe des Umschaltmittels (66) empfängt; ein Tiefpass-Filter (52), welches die Ausgabe des Phasenkomparators (50) in ein Spannungssignal umwandelt; und einen Spannungskomparator (54), welcher das Spannungssignal mit einer Referenzspannung ($V_{ref}$) vergleicht und das das Fernsehsignal kennzeichnende Bestimmungssignal erzeugt, enthält.

## Revendications

1. Circuit de détermination de signal de télévision PAL/SECAM, comprenant:

   un moyen de sortie de signal de tension (12) pour fournir en sortie un signal de tension ayant un niveau selon une fréquence sous-porteuse (fsc) d'un signal de couleur d'entrée;

   un moyen de maintien de signal (46) pour maintenir ledit signal de tension lors d'une période de ligne horizontale afin d'obtenir un signal maintenu;

   un moyen de retard (48) pour retarder ledit signal maintenu pour une ligne horizontale, ledit moyen de retard (48) comportant des premier et second moyens d'échantillonnage et de maintien (62, 64) pour échantillonner et maintenir en alternance ledit signal maintenu, respectivement, lors de deux lignes horizontales, afin de produire des premier et second signaux rectangulaires;

   un moyen de commutation (66) pour fournir en sortie en alternance lesdits premier et second signaux rectangulaires pour une ligne horizontale; et

   un moyen de sortie de signal de détermination (50, 52, 54) pour fournir en sortie un signal de détermination à partir dudit signal maintenu et de la sortie dudit moyen de commutation (66), ledit moyen de sortie de signal de détermination (50, 52, 54) comportant un comparateur de phase (50) qui reçoit ledit signal maintenu et ladite sortie dudit moyen de commutation (66); un filtre passe-bas (52) qui convertit la sortie dudit comparateur de phase (50) en un signal de tension; et un comparateur de tension (54) qui compare ledit signal de tension à une tension de référence ($V_{ref}$) et produit ledit signal de détermination indicateur dudit signal de télévision.

2. Circuit de détermination de signal de télévision PAL/SECAM (10) selon la revendication 1, dans lequel ledit moyen de sortie de signal de tension (12) comporte un premier moyen pour fournir en sortie ladite fréquence sous-porteuse (fsc) en tant que signal représentatif d'une phase, et un second moyen pour convertir ledit signal représentatif de phase en ledit signal de tension.

3. Circuit de détermination de signal de télévision PAL/SECAM (10) selon la revendication 2, dans lequel ledit premier moyen (12) comporte un filtre passe-tout (14).

4. Circuit de détermination de signal de télévision PAL/SECAM (10) selon la revendication 3, dans lequel ledit filtre passe-tout (14) comporte un filtre passe-tout variable en fréquence ayant une fréquence centrale réglable, ledit circuit (10) comprenant en outre:

   un moyen générateur de signal pour générer un signal de fréquence ayant une fréquence prédéterminée égale à ladite fréquence sous-porteuse (fsc) ou dans le voisinage de ladite fréquence sous-porteuse (fsc);

   un premier moyen de commutation pour appliquer ledit signal de couleur d'entrée audit filtre passe-tout variable en fréquence lors d'une période d'impulson de synchronisateur couleur, et ledit signal de fréquence audit filtre passe-tout variable en fréquence lors d'une période autre que ladite période d'impulsion de synchronisateur couleur; et

un moyen de commande pour commander la fréquence centrale dudit filtre passe-tout variable en fréquence à partir dudit signal représentatif de phase obtenu lors d'une période autre que ladite période d'impulsion de synchronisateur couleur.

5. Circuit de détermination de signal de télévision PAL/SECAM (10) selon l'une quelconque des revendications 1 à 4, dans lequel ledit moyen de retard (48) comporte un circuit d'échantillonnage et de maintien (46) pour échantillonner et maintenir ledit signal de tension lors de ladite période d'impulsion de synchronisateur couleur.

6. Circuit de détermination de signal de télévision PAL/SECAM (10) selon la revendication 1, dans lequel lesdits premier et second moyens d'échantillonnage et de maintien (62, 64) fournissent en sortie un niveau moyen de valeurs de pointe dudit signal de tension, et des impulsions de commande fournies auxdits premier et second moyens d'échantillonnage et de maintien (62, 64) sont des signaux d'impulsion ayant deux intervalles de période de ligne horizontale et déviant l'un de l'autre par une période de ligne horizontale.

7. Récepteur de télévision susceptible de recevoir un signal de télévision au moins d'un système SECAM, comprenant:

un moyen de sortie de signal de tension (12) pour fournir en sortie un signal de tension ayant un niveau selon une fréquence sous-porteuse (fsc) d'un signal de couleur d'entrée;

un moyen de maintien de signal (46) pour maintenir ledit signal de tension lors d'une période de ligne horizontale afin d'obtenir un signal maintenu;

un moyen de retard (48) pour retarder ledit signal maintenu pour une ligne horizontale, ledit moyen de retard (48) comportant des premier et second moyens d'échantillonnage et de maintien (62, 64) pour échantillonner et maintenir en alternance ledit signal maintenu, respectivement, lors de deux lignes horizontales, afin de produire des premier et second signaux rectangulaires;

un moyen de commutation (66) pour fournir en sortie en alternance lesdits premier et second signaux rectangulaires pour une ligne horizontale; et

un moyen de sortie de signal de détermination (50, 52, 54) pour fournir en sortie un signal de détermination à partir dudit signal maintenu et de la sortie dudit moyen de commutation (66), ledit moyen de sortie de signal de détermination (50, 52, 54) comportant un comparateur de phase (50) qui reçoit ledit signal maintenu et ladite sortie dudit moyen de commutation (66); un filtre passe-bas (52) qui convertit la sortie dudit comparateur de phase (50) en un signal de tension; et un comparateur de tension (54) qui compare ledit signal de tension à une tension de référence ($V_{ref}$) et produit ledit signal de détermination indicateur dudit signal de télévision.

8. Appareil d'enregistrement/reproduction d'un signal de télévision (100) susceptible de recevoir un signal de télévision au moins d'un système SECAM, comprenant:

un moyen de sortie de signal de tension (12) pour fournir en sortie un signal de tension ayant un niveau selon une fréquence sous-porteuse (fsc) d'un signal de couleur d'entrée;

un moyen de maintien de signal (46) pour maintenir ledit signal de tension lors d'une période de ligne horizontale afin d'obtenir un signal maintenu;

un moyen de retard (48) pour retarder ledit signal maintenu pour une ligne horizontale, ledit moyen de retard (48) comportant des premier et second moyens d'échantillonnage et de maintien (62, 64) pour échantillonner et maintenir en alternance ledit signal maintenu, respectivement, lors de deux lignes horizontales, afin de produire des premier et second signaux rectangulaires;

un moyen de commutation (66) pour fournir en sortie en alternance lesdits premier et second signaux rectangulaires pour une ligne horizontale; et

un moyen de sortie de signal de détermination (50, 52, 54) pour fournir en sortie un signal de détermination à partir dudit signal maintenu et de la sortie dudit moyen de commutation (66), ledit moyen de sortie de signal de détermination (50, 52, 54) comportant un comparateur de phase (50) qui reçoit ledit signal maintenu et ladite sortie dudit moyen de commutation (66); un filtre passe-bas (52) qui convertit la sortie dudit comparateur de phase (50) en un signal de tension; et un comparateur de tension (54) qui compare ledit signal de tension à une tension de référence ($V_{ref}$) et produit ledit signal de détermination indicateur dudit signal de télévision.

# F I G. 1

EP 0 614 320 B1

## F I G. 2

## F I G. 3

F·I G. 4

F I G. 5

EP 0 614 320 B1

# F I G.6

# F I G. 7

(A) SIGNAL TO 42,44

(B) SIGNAL TO 46,48

(C) VOLTAGE AT A

(D) VOLTAGE AT B

(E) OUTPUT OF 40

(F) OUTPUT OF 42

# F I G. 8

(A) OUTPUT OF 12 — 4.25MHz 4.41MHz 4.25MHz 4.41MHz 4.25MHz 4.41MHz 4.25MHz | fsc | fsc | fsc | fsc | fsc | fsc | fsc |

(B) BGP

(C) OUTPUT OF 42

(D) OUTPUT OF 46

(E) OUTPUT OF 50 — CENTER LEVEL

# FIG. 9

(A) OUTPUT OF 12 — 4.43MHz 4.43MHz 4.43MHz 4.43MHz 4.43MHz 4.43MHz 4.43MHz | fsc | fsc | fsc | fsc | fsc | fsc | fsc |

(B) BGP

(C) OUTPUT OF 42 — a

(D) OUTPUT OF 46

(E) OUTPUT OF 50 — CENTER LEVEL

# F I G. 10

# F I G. 11

# F I G.12

# F I G.13

(A) OUTPUT OF 12

4.25MHz  4.41MHz  4.25MHz  4.41MHz  4.25MHz  4.41MHz

fsc  fsc  fsc  fsc  fsc  fsc

(B) OUTPUT OF 42

V1  V2  V3  V4  V5  V6

(C) OUTPUT OF 55

AVERAGED PEAK LEVEL BEFORE CURRENT SIGNAL

0

(D) OUTPUT OF 56

AVERAGED PEAK LEVEL BEFORE CURRENT SIGNAL

0

(E) OUTPUT OF 57

0

(F) OUTPUT OF 58

0

(G) OUTPUT OF 50

0

(H) CNT1 (BGP)

(I) CNT2

(J) CNT3

(K) CNT4

# F I G.14

(A) OUTPUT OF 12

4.43MHz

fsc | fsc | fsc | fsc | fsc | fsc

(B) OUTPUT OF 42

V1    V2    V3    V4    V5    V6

(C) OUTPUT OF 55

0    AVERAGED PEAK LEVEL BEFORE CURRENT SIGNAL

(D) OUTPUT OF 56

0    AVERAGED PEAK LEVEL BEFORE CURRENT SIGNAL

(E) OUTPUT OF 57

0

(F) OUTPUT OF 58

0

(G) OUTPUT OF 50

0

(H) CNT1 (BGP)

(I) CNT2

(J) CNT3

(K) CNT4

EP 0 614 320 B1

# F I G.15

# .F I G.16

(A) OUTPUT OF 42 IN PAL INCLUDING NO NOISE

(B) OUTPUT OF 42 IN PAL INCLUDING NOISE

(C) OUTPUT OF 46

(D) OUTPUT OF 48

(E) OUTPUT OF 52

(F) OUTPUT OF 54

(G) OUTPUT OF 55

(H) OUTPUT OF 56

(I) OUTPUT OF 52

(J) OUTPUT OF 54

Figure 1

Figure 12

EP 0 614 320 B1

# F I G. 17

**100**

TUNER `101` — V I F `102` — DETECTION `103` — Y/C SEPERATION `104` — VIDEO AMP `105` — VIDEO OUTPUT `107` — `108`

COLOR CIRCUIT `106`

`10`